(19) Europäisches Patentamt
European Patent Office
Office européen des brevets

(11) **EP 4 099 123 A1**

(12) **EUROPEAN PATENT APPLICATION**

(43) Date of publication:
**07.12.2022 Bulletin 2022/49**

(21) Application number: **22174337.0**

(22) Date of filing: **19.05.2022**

(51) International Patent Classification (IPC):
**G05D 1/02** *(2020.01)*

(52) Cooperative Patent Classification (CPC):
**G05D 1/0223; G01C 21/20; G05D 1/0219;**
G05D 2201/0201

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.05.2021 JP 2021091530**

(71) Applicant: **Yanmar Holdings Co., Ltd.
Osaka-shi, Osaka (JP)**

(72) Inventor: **NAKAHATA, Akihiro
Osaka (JP)**

(74) Representative: **Novagraaf International SA
Chemin de l'Echo 3
1213 Onex, Geneva (CH)**

(54) **ROUTE GENERATION METHOD, ROUTE GENERATION DEVICE, AND ROUTE GENERATION PROGRAM**

(57)      [Problem]To provide a route generation method, a route generation device, and a route generation program capable of grasping the travel speed of a work vehicle autonomously traveling on a slope land before starting the autonomous traveling.

[Solution]A route generation method is a method for generating a target route R for a work vehicle 10 autonomously traveling in a travel area, and executes acquiring an inclination angle of the travel area, setting a travel speed of the work vehicle 10 for the travel area on a basis of the inclination angle of the travel area, and generating the target route R including speed information of the travel speed set for the travel area.

FIG. 16

**Description**

TECHNICAL FIELD

This invention relates to a route generation method, a route generation device, and a route generation program for generating a target route for a traveling vehicle that autonomously travels in a travel area.

BACKGROUND ART

A work vehicle that travels autonomously along a preset target route in fields, farms, and other work areas is known (see, for example,
[0003]   Patent Document 1). The aforementioned work vehicle is equipped with a function to detect the inclination angle of the work vehicle by a sensor mounted on the work vehicle and to change the travel speed of the work vehicle or stop the work vehicle on the basis of the detected inclination angle.

PRIOR ART DOCUMENT

PATENT DOCUMENT

Patent Document 1: Japanese Patent Application Publication No. 2005-215742

SUMMARY OF INVENTION

TECHNICAL PROBLEM

However, the aforementioned conventional work vehicle is configured to detect an inclination angle while traveling autonomously on a slope land and control the traveling, and thus the aforementioned work vehicle changes a preset travel speed or stops the traveling in accordance with the inclination angle of the slope land detected during the autonomous traveling. Therefore, according to the conventional work vehicle described above, it is difficult for the user (operator) to know in advance the travel speed of the work vehicle when the work vehicle actually travels on a slope land, and it is difficult to accurately grasp the work schedule, such as the required work time.
The object of the present invention relates to a route generation method, a route generation device, and a route generation program capable of grasping the travel speed of a work vehicle autonomously traveling on a slope land before starting the autonomous traveling.

SOLUTION TO PROBLEM

A route generation method according to the present invention is a method for generating a target route for a traveling vehicle autonomously traveling in a travel area and executes acquiring an inclination angle of the travel area, setting a travel speed of the traveling vehicle for the travel area on a basis of the inclination angle of the travel area, and generating the target route including speed information of the travel speed set for the travel area.
A route generation device according to the present invention is a route generation device for generating a target route for a traveling vehicle autonomously traveling in a travel area, and includes an acquisition processor, a speed setting processor, and a route generation processor. The acquisition processor acquires the inclination angle of the travel area. The speed setting processor sets the travel speed of the traveling vehicle for the travel area on the basis of the inclination angle of the travel area. The route generation processor generates the target route including speed information of the travel speed set for the travel area.
A route generation program according to the present invention is a program for generating a target route for a traveling vehicle that autonomously travels in a travel area. Further, the route generation program is a program for causing one or more processors to execute acquiring an inclination angle of the travel area, setting a travel speed of the traveling vehicle for the travel area on a basis of the inclination angle of the travel area, and generating the target route including speed information of the travel speed set for the travel area.

ADVANTAGEOUS EFFECTS OF INVENTION

According to the present invention, it is possible to provide a route generation method, a route generation device, and a route generation program capable of grasping the travel speed of a work vehicle autonomously traveling on a slope land before starting the autonomous traveling.

BRIEF DESCRIPTION OF DRAWINGS

FIG. 1 is a schematic diagram illustrating an overall configuration of an autonomous travel system according to an embodiment of the present invention.

FIG. 2 is a block diagram illustrating a configuration of the autonomous travel system according to the embodiment of the present invention.

FIG. 3 is an external view of a work vehicle according to the embodiment of the present invention, viewed from the left front side.

FIG. 4A is an external view of the left side of the work vehicle according to the embodiment of the present invention, viewed from the left side.

FIG. 4B is an external view of the right side of the work vehicle according to the embodiment of the present invention, viewed from the right side.

FIG. 4C is an external view of the back side of the work vehicle according to the embodiment of the present invention, viewed from the back side.

FIG. 5 is a diagram illustrating an example of a crop row according to the embodiment of the present invention.

FIG. 6 is a diagram illustrating an example of a target route according to an embodiment of the present invention.

FIG. 7A is a diagram for explaining a method for generating the target route according to the embodiment of the present invention.

FIG. 7B is a diagram for explaining a method for generating the target route according to the embodiment of the present invention.

FIG. 8 is a diagram illustrating an example of a field according to the embodiment of the present invention.

FIG. 9 is a diagram illustrating an example of a crop row arrangement according to the embodiment of the present invention.

FIG. 10 is a diagram illustrating an example of an inclination state of a work route according to the embodiment of the present invention.

FIG. 11 is a side view illustrating an example of a traveling state where a work vehicle according to the embodiment of the present invention travels on a slope land.

FIG. 12 is a rear view illustrating an example of a traveling state where the work vehicle according to the embodiment of the present invention travels on a slope land.

FIG. 13A is a diagram for explaining a method for calculating the right-left inclination angle of the work route according to the embodiment of the present invention.

FIG. 13B is a diagram for explaining a method for calculating the right-left inclination angle of the work route according to the embodiment of the present invention.

FIG. 14 is a diagram illustrating an example of travel speed information used in an autonomous travel system according to the embodiment of the present invention.

FIG. 15A is a diagram illustrating an example of a display screen displayed on an operation terminal according to the embodiment of the present invention.

FIG. 15B is a diagram illustrating an example of the display screen displayed on the operation terminal according to the embodiment of the present invention.

FIG. 15C is a diagram illustrating an example of the display screen displayed on the operation terminal according to the embodiment of the present invention.

FIG. 15D is a diagram illustrating an example of the display screen displayed on the operation terminal according to the embodiment of the present invention.

FIG. 15E is a diagram illustrating an example of the display screen displayed on the operation terminal according to the embodiment of the present invention.

FIG. 16 is a flowchart illustrating an example of a procedure of route generation processing executed by the autonomous travel system according to the embodiment of the present invention.

FIG. 17 is a diagram for explaining a method for calculating the inclination angle of a headland area according to the embodiment of the present invention.

FIG. 18 is a diagram illustrating an example of the display screen displayed on the operation terminal according to the embodiment of the present invention.

FIG. 19 is a diagram illustrating an example of travel speed information used in the autonomous travel system according to the embodiment of the present invention.

DESCRIPTION OF EMBODIMENTS

The embodiments described below are examples of embodiments of the present invention and do not limit the technical scope of the present invention.

[Autonomous Travel System 1]

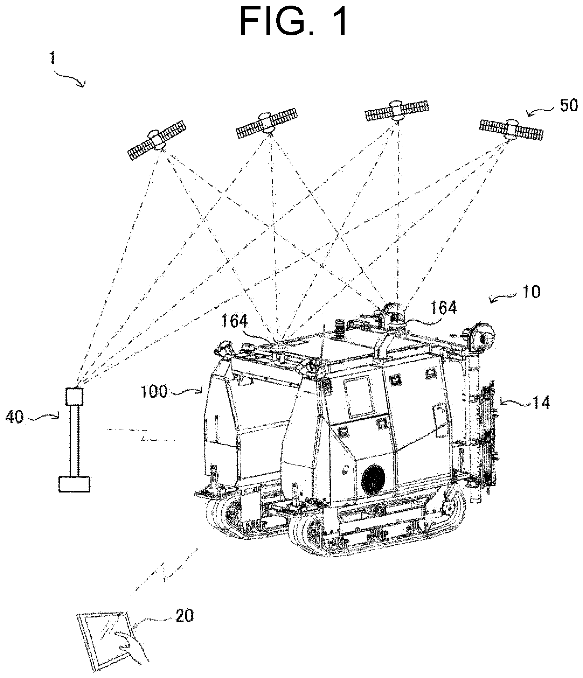

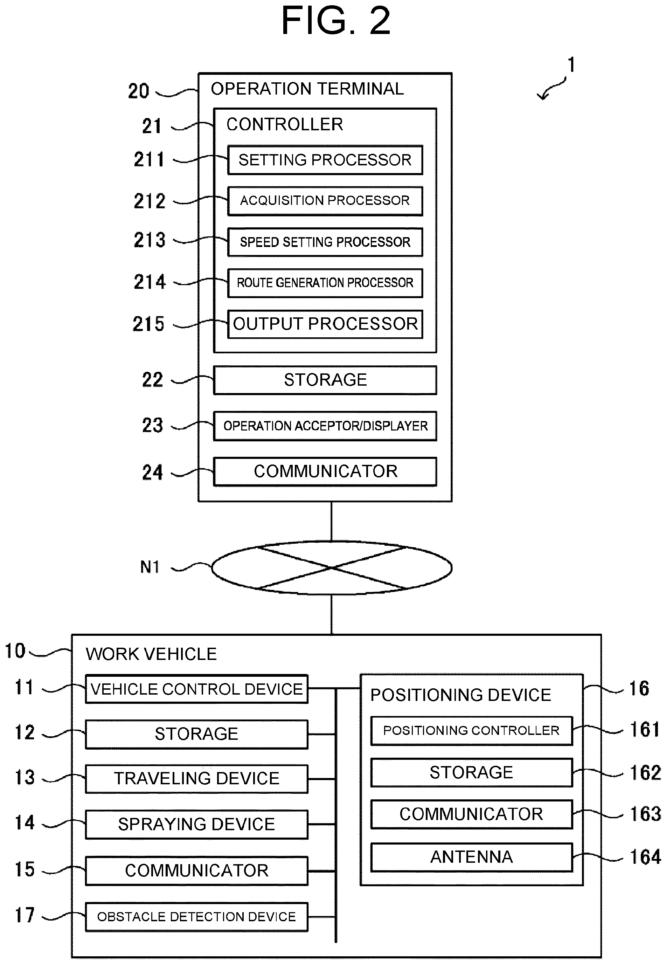

As illustrated in FIGs. 1 and 2, an autonomous travel system 1 according to an embodiment of the present invention includes a work vehicle 10, an operation terminal 20, a base station 40, and a satellite 50. The work vehicle 10 and the operation terminal 20 can communicate via a communication network N1. For example, the work vehicle 10 and the operation terminal 20 can communicate via a cellular telephone line network, a packet line network, or a wireless LAN.

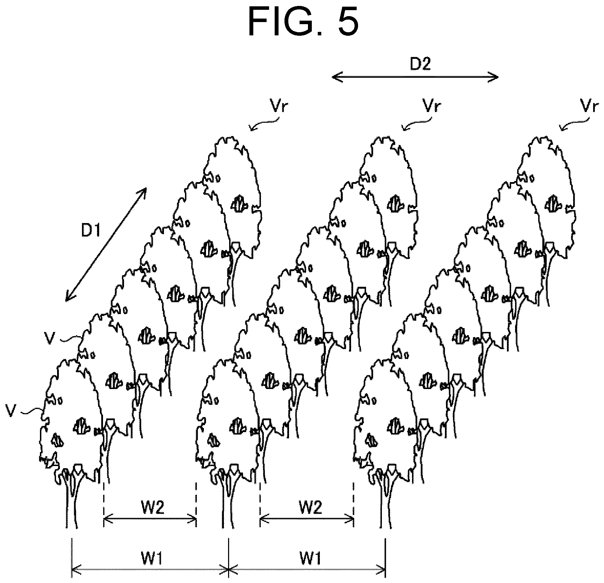

In the present embodiment, a case where a work vehicle 10 is a vehicle that performs a spraying work to spray a chemical solution, water, or the like on the crops V (see FIG. 5) planted in a field F is taken as an example. The field F is, for example, an orchard such as a vineyard or an apple orchard. The crop V is, for example, the fruit tree of a grape. The aforementioned spraying work is, for example, the spraying of a chemical solution, water, or the like on the crop V. As another embodiment, the work vehicle 10 may be a vehicle that performs a weeding work, a vehicle that performs a leaf-cutting work, or a vehicle that performs a harvesting work. The work vehicle 10 is an example of the traveling vehicle of the present invention.

The crop V is arranged in multiple rows at predetermined intervals in the field F. Specifically, as illustrated in FIG. 5, a plurality of crops V are planted in a straight line in a predetermined direction (direction D1), constituting a crop row Vr that includes a plurality of crops V in a straight line. FIG. 5 illustrates an example of three crop rows Vr. Each crop row Vr is arranged with a predetermined interval W1 in a row direction (direction D2). The area (space) of an interval W2 between adjacent crop rows Vr is the work passage where the work vehicle 10 performs the spraying work on the crop V while traveling in the direction D1.

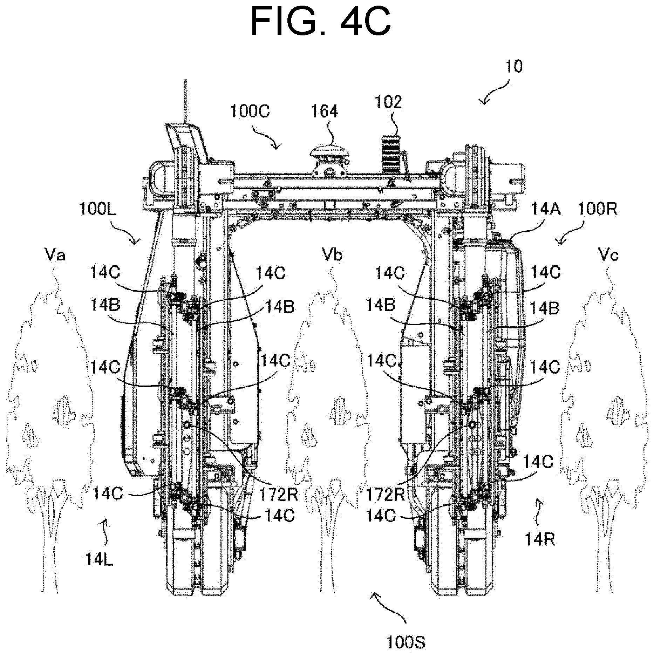

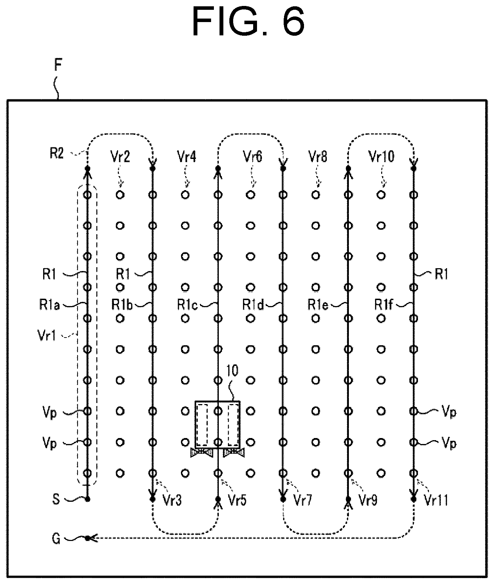

Further, the work vehicle 10 can perform the automatic traveling (autonomous traveling) along a preset target route R. For example, as illustrated in FIG. 6, the work vehicle 10 autonomously travels along the target route R that includes work routes R1 (work routes R1a to R1f) and movement route R2, from a work start position S (the travel start position of the present invention) to a work end position G (the travel end position of the present invention). The work routes R1 are linear routes where the work vehicle 10 performs the spraying work on the crops V, and the movement route R2 is a route where the work vehicle 10 moves between crop rows Vr without performing the spraying work. The movement route R2 includes a turning route and a straight route, for example. In the example illustrated in FIG. 6, the crops V consisting of the crop rows Vr1 to Vr11 are arranged in the field F. In FIG. 6, the positions where the crops V are planted (crop positions) are indicated with "Vp". Further, the work vehicle 10 traveling in the field F of FIG. 6 has a gate-shaped vehicle body 100 (see FIG. 4C), so as to travel over one crop row Vr and, in the meantime, spray a chemical solution on the crops V of the crop row Vr and on the crop rows Vr adjacent to the crop row Vr. For example, as illustrated in FIG. 6, in a case where the work vehicle 10 travels over the crop row Vr5, the left side vehicle body (left side section 100L) of the work vehicle 10 travels through the work passage between crop rows Vr4 and Vr5, and the right side vehicle body (right side section 100R) of the work vehicle 10 travels through the work passage between the crop rows Vr5 and Vr6, so that a chemical solution is sprayed on the crops V in the crop rows Vr4, Vr5, and Vr6. The work routes R1 and the movement route R2 are respectively an example of the travel route of the present invention.

Further, the work vehicle 10 travels autonomously in a predetermined row order. For example, the work vehicle 10 travels over the crop row Vr1, then over the crop row Vr3, then over the crop row Vr5. In this way, the work vehicle 10 performs autonomous traveling in accordance with a preset crop row Vr order. The work vehicle 10 may travel one row at a time in the order in which the crop rows Vr are arranged, or may travel every other row of a plurality of rows.

The satellite 50 is a positioning satellite that constitutes a satellite positioning system such as GNSS (Global Navigation Satellite System), and transmits a GNSS signal (satellite signal). The base station 40 is a reference point (reference station) that constitutes the satellite positioning system. The base station 40 transmits correction information to the work vehicle 10 to calculate the current position of the work vehicle 10.

The positioning device 16 mounted on the work vehicle 10 executes positioning processing that calculates the current position (latitude, longitude, and altitude) and the current orientation of the work vehicle 10 with the use of the GNSS signal transmitted from the satellite 50. Specifically, the positioning device 16 measures the position of the work vehicle 10 with the use of an RTK (Real Time Kinematic) method or the like for measuring the position of the work vehicle 10 on the basis of the positioning information (GNSS signal, etc.) received by two receivers (antenna 164 and base station 40) and the correction information generated by the base station 40. The aforementioned positioning method is a well-known technique, and thus the detailed description is omitted.

The following is a detailed description of each component of the autonomous travel system 1.

[Work Vehicle 10]

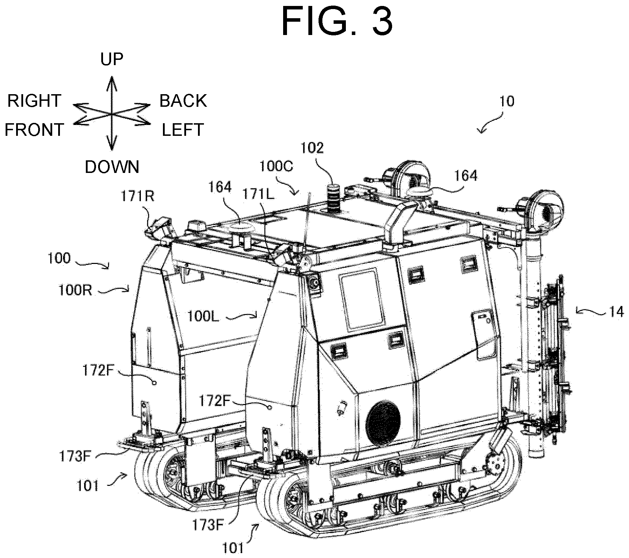

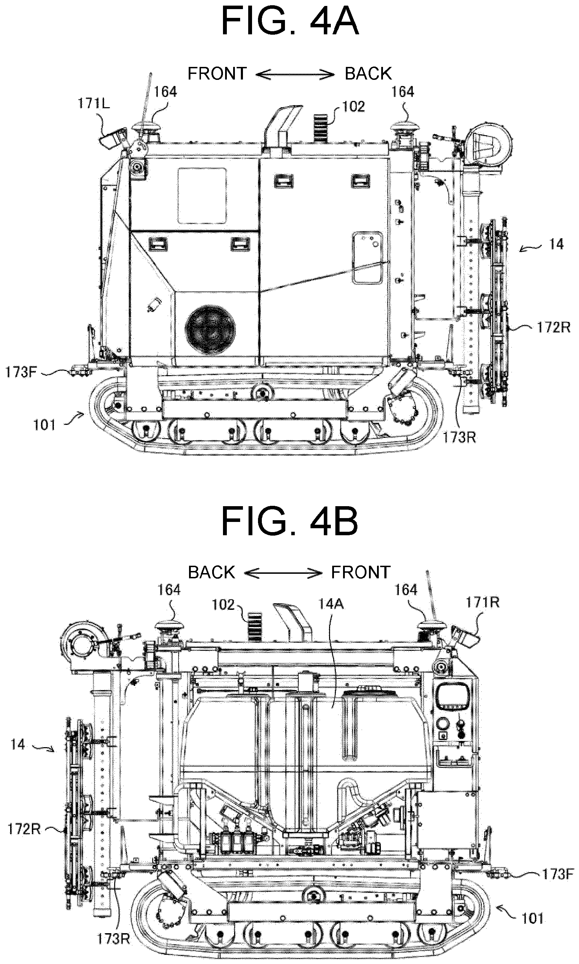

FIG. 3 is an external view of the work vehicle 10, viewed from the left front side. FIG. 4A is an external view of the left side of the work vehicle 10 viewed from the left side, FIG. 4B is an external view of the right side of the work vehicle 10 viewed from the right side, and FIG. 4C is an external view of the back side of the work vehicle 10 viewed from the back side.

As illustrated in FIGs. 1 to 4, the work vehicle 10 includes a vehicle control device 11, a storage 12, a traveling device 13, a spraying device 14, a communicator 15, a positioning device 16, and an obstacle detection device 17. The vehicle control device 11 is electrically connected to the storage 12, traveling device 13, spraying device 14, positioning device 16, obstacle detection device 17, and the like. The vehicle control device 11 and the positioning device 16 may be capable of wireless communication.

The communicator 15 is a communication interface for connecting the work vehicle 10 to the communication network N1 by wire or wirelessly and for executing data communication according to a predetermined communication protocol with external devices such as the operation terminal 20 via the communication network N1.

The storage 12 is a non-volatile storage such as an HDD (Hard Disk Drive) or an SSD (Solid State Drive) that stores various types of information. The storage 12 stores control programs such as an autonomous traveling program to cause the vehicle control device 11 to perform autonomous travel processing. For example, the aforementioned autonomous traveling program is non-transiently recorded on a computer-readable recording medium such as a CD and a DVD, and is read by a predetermined reading device (not illustrated) and stored in the storage 12. The aforementioned autonomous traveling program may be downloaded from a server (not illustrated) to the work vehicle 10 via the communication network N1 and stored in the storage 12. Further, the storage 12 stores route data including information on the target route R generated at the operation terminal 20. For example, the aforementioned route data is transferred from the operation terminal 20 to the work vehicle 10 and stored in the storage 12.

The vehicle control device 11 includes control devices such as a CPU, a ROM, and a RAM. The aforementioned CPU is a processor that performs various arithmetic operations. The aforementioned ROM is a non-volatile storage in which control programs such as a BIOS and an OS for causing the CPU to execute various types of arithmetic processing are stored in advance. The aforementioned RAM is a volatile or non-volatile storage that stores various information, and is used as a temporary storage memory (work area) for various types of processing executed by the CPU. In addition, the vehicle control device 11 controls the work vehicle 10 by executing various control programs stored in advance in the aforementioned ROM or the storage 12 by the CPU.

The vehicle control device 11 controls the travel of the work vehicle 10. Specifically, the vehicle control device 11 causes the work vehicle 10 to autonomously travel along the target route R on the basis of position information indicating the position of the work vehicle 10 measured by the positioning device 16. For example, when the aforementioned positioning state becomes RTK positioning available and the operator presses the start button on the operation terminal 20, the operation terminal 20 outputs a work start instruction to the work vehicle 10. When acquiring the work start instruction from the operation terminal 20, the vehicle control device 11 starts the autonomous traveling of the work vehicle 10 on the basis of the position information indicating the position of the work vehicle 10 measured by the positioning device 16. As a result, the work vehicle 10 starts autonomous traveling along the target route R and starts a spraying work by the spraying device 14 in the work passage.

Further, the vehicle control device 11 stops the autonomous traveling of the work vehicle 10 when acquiring a travel stop instruction from the operation terminal 20. For example, when the operator presses the stop button on the operation screen of the operation terminal 20, the operation terminal 20 outputs the aforementioned travel stop instruction to the work vehicle 10. The vehicle control device 11 stops the autonomous traveling of the work vehicle 10 when acquiring the aforementioned travel stop instruction from the operation terminal 20. This causes the work vehicle 10 to stop its autonomous traveling and the spraying work by the spraying device 14.

The work vehicle 10 includes a gate-shaped vehicle body 100 that travels over crops V (fruit trees) planted in multiple rows in the field F. As illustrated in FIG. 4C, the vehicle body 100 is formed in a gantry shape by a left side section 100L, a right side section 100R, and a connection section 100C connecting the left side section 100L and right side section 100R. A space 100S that allows the passage of the crop V is secured inside the left side section 100L, the right side section 100R, and the connection section 100C.

Crawlers 101 are provided at the lower end of each of the left side section 100L and right side section 100R of the vehicle body 100. An engine (not illustrated) and a battery (not illustrated) are provided on the left side section 100L. A storage tank 14A (see FIG. 4B) and the like of the spraying device 14 are provided on the right side section 100R. In this way, by distributing and arranging the components on the left side section 100L and the right side section 100R of the vehicle body 100, the balance between the right and left is equilibrated and the center of gravity is lowered in the work vehicle 10. As a result, the work vehicle 10 can travel stably on slopes and other surfaces in the field F.

The traveling device 13 is the driver that drives the work vehicle 10. The traveling device 13 includes an engine, the crawlers 101, and the like.

The right and left crawlers 101 are driven by power from the engine with independent speed changes possible through a hydrostatic stepless transmission device. Accordingly, the vehicle body 100 is brought into a state of traveling straight in the forward-traveling direction by driving the right and left crawlers 101 at an even speed in the forward-traveling direction and is brought into a state of traveling straight in the backward-traveling direction by driving the right and left crawlers 101 at an even speed in the backward-traveling direction. Further, the vehicle body 100 is brought into a state of turning while traveling forward by driving the right and left crawlers 101 at an uneven speed in the forward-traveling direction and is brought into a state of turning while traveling backward by driving the right and left crawlers 101 at an uneven speed in the backward-traveling direction. Further, the vehicle body 100 is brought into a pivot turn (pivotal brake turn) state by driving one of the right and left crawlers 101 while the driving of the other crawler 101 is stopped, and is brought into a spin turn state (ultra-pivotal turn) by driving the right and left crawlers 101 at an even speed in the forward-traveling direction and the backward-traveling direction. Further, the vehicle body 100 is brought to a traveling stopped state by stopping the driving of the right and left crawlers 101. The right and left crawlers 101 may be configured so as to be electrically driven by an electric motor.

As illustrated in FIG. 4C, the spraying device 14 includes a storage tank 14A that stores a chemical solution or the like, a spraying pump (not illustrated) that pumps the chemical solution or the like, an electric spraying motor (not illustrated) that drives the spraying pump, two spray pipes 14B provided in parallel on the right and left on the back of the vehicle body 100 in a vertical position, a total of 12 spray nozzles 14C, three provided for each spray pipe 14B, an electronically controlled valve unit (not illustrated) that changes the amount and pattern of spraying the chemical solution or the like, and a plurality of spraying pipes (not illustrated) connecting these.

Each spray nozzle 14C is attached to the corresponding spray pipe 14B in a vertically repositionable manner. This allows each spray nozzle 14C to change the interval between adjacent spray nozzles 14C and the height position with respect to the spray pipe 14B in accordance with the object to be sprayed (crop V). Further, each spray nozzle 14C is attached in such a manner that the height position and right/left position with respect to the vehicle body 100 can be changed in accordance with the object to be sprayed.

In the spraying device 14, the number of the spray nozzles 14C provided in each spray pipe 14B can be changed in various ways depending on the type of crop V, the length of each spray pipe 14B, and other factors.

As illustrated in FIG. 4C, of the plurality of spray nozzles 14C, three spray nozzles 14C provided on the leftmost spray pipe 14B spray the chemical solution to the left toward the crop Va located on the left outer side of the vehicle body 100. Of the plurality of spray nozzles 14C, three spray nozzles 14C provided on the left inner spray pipe 14B adjacent to the leftmost spray pipe 14B spray the chemical solution to the right toward a crop Vb located in the space 100S at the center of the right and left sides of the vehicle body 100. Of the plurality of spray nozzles 14C, three spray nozzles 14C provided on the rightmost spray pipe 14B spray the chemical solution to the right toward a crop Vc located on the right outer side of the vehicle body 100. Of the plurality of spray nozzles 14C, three spray nozzles 14C provided on the right inner spray pipe 14B adjacent to the rightmost spray pipe 14B spray the chemical solution to the left toward the crop Vb located in the space 100S.

With the above configuration, in the spraying device 14, the two spray pipes 14B and six spray nozzles 14C on the left side section 100L of the vehicle body 100 function as a left side sprayer 14L. Further, the two spray pipes 14B and six spray nozzles 14C on the right side section 100R of the vehicle body 100 function as a right side sprayer 14R. In addition, the right and left sprayers 14L and 14R are disposed on the back of the vehicle body 100 with a right-left interval that allows the passage of the crop Vb (space 100S) between the right and left sprayers 14L and 14R in the state of being able to spray in the right-left directions.

In the spraying device 14, the spray patterns by the sprayers 14L and 14R include a 4-way spray pattern where each of the sprayers 14L and 14R sprays the chemical solution in both the right and left directions, and a direction-limited spray pattern where the direction of the spray by the sprayers 14L and 14R is limited. The aforementioned direction-limited spray pattern includes a left side 3-way spray pattern where the sprayer 14L sprays the chemical solution in both right and left directions and the sprayer 14R sprays the chemical solution only in the left direction, a right side 3-way spray pattern where the sprayer 14L sprays the chemical solution only in the right direction and the sprayer 14R sprays the chemical solution in both right and left directions, a 2-way spray pattern where the sprayer 14L sprays the chemical solution only in the right direction and the sprayer 14R sprays the chemical solution only in the left direction, a left side 1-way spray pattern where the sprayer 14L sprays only in the left direction and the sprayer 14R does not spray the chemical solution, and a right side 1-way spray pattern where the sprayer 14R sprays only in the right direction and the sprayer 14L does not spray the chemical solution.

Mounted on the vehicle body 100 are an autonomous traveling controller that causes the vehicle body 100 to autonomously travel along the target route R in the field F on the basis of positioning information or the like acquired from the positioning device 16, an engine controller that controls the engine, and an HST (Hydro-Static Transmission) controller that controls a hydrostatic stepless transmission device, and a work device controller that controls a work device such as the spraying device 14. Each controller is constructed by an electronic control unit equipped with a microcontroller or the like, various information, a control program, or the like stored in a non-volatile memory of the microcontroller (for example, EEPROM such as a flash memory). Various information stored in non-volatile memory may include a pre-generated target route R, and the like. In the present embodiment, the respective controllers are collectively referred to as the "vehicle control device 11" (see FIG. 2).

The positioning device 16 is a communication device equipped with a positioning controller 161, a storage 162, a communicator 163, an antenna 164, and the like. The antenna 164 is provided in front of and behind the ceiling of the vehicle body 100 (connection section 100C) (see FIG. 3). Further, the ceiling of the vehicle body 100 is also equipped with an indicator light 102 or the like that displays the traveling state of the work vehicle 10 (see FIG. 3). The aforementioned battery is connected to the positioning device 16, and the positioning device 16 can operate while the aforementioned engine is stopped.

The communicator 163 is a communication interface for connecting the positioning device 16 to the communication network N1 by wire or wirelessly and for executing data communication according to a predetermined communication protocol with external devices such as the base station 40 via the communication network N1.

The antenna 164 receives radio waves (GNSS signals) transmitted from satellites. Since the antenna 164 is provided in front of and behind the work vehicle 10, the current position and orientation of the work vehicle 10 can be accurately measured.

The positioning controller 161 is a computer system including one or more processors and a storage memory such as a non-volatile memory and a RAM. The storage 162 is a non-volatile memory or the like that stores control programs for causing the positioning controller 161 perform positioning processing, as well as data such as positioning information and movement information. The positioning controller 161 measures the current position and current orientation of the work vehicle 10 by a predetermined positioning method (RTK method, etc.) on the basis of GNSS signals that the antenna 164 receives from the satellite 50.

The obstacle detection device 17 includes a LiDAR sensor 171L on the front left side of the vehicle body 100 and a LiDAR sensor 171R on the front right side of the vehicle body 100 (see FIG. 3). Each LiDAR sensor measures the distance from the LiDAR sensor to each distance measurement point (object to be measured) in the measurement range by, for example, the TOF (Time Of Flight) method, in which the distance to the distance measurement point is measured on the basis of the round-trip time for a laser light emitted by the LiDAR sensor to return after reaching the distance measurement point.

For the LiDAR sensor 171L, a predetermined range on the front left side of the vehicle body 100 is set as the measurement range, and for the LiDAR sensor 171R, a predetermined range on the front right side of the vehicle body 100 is set as the measurement range. Each LiDAR sensor transmits measurement information to the vehicle control device 11, such as the distance to each distance measurement point and the scanning angle (coordinates) to each distance measurement point.

Further, the obstacle detection device 17 includes right and left ultrasonic sensors 172F (see FIG. 3) provided on the front side of the vehicle body 100 and right and left ultrasonic sensors 172R (see FIGs. 4A to 4B) provided on the rear side of the vehicle body 100. Each ultrasonic sensor measures the distance from the ultrasonic sensor to the object to be measured by the TOF method, in which the distance to the distance measurement point is measured on the basis of the round-trip time for an ultrasonic wave transmitted by the ultrasonic sensor to return after reaching the distance measurement point.

For the ultrasonic sensor 172F on the front left side, a predetermined range on the front left side of the vehicle body 100 is set as the measurement range. For the ultrasonic sensor 172F on the front right side, a predetermined range on the front right side of the vehicle body 100 is set as the measurement range. For the ultrasonic sensor 172R on the rear left side, a predetermined range on the rear left side of the vehicle body 100 is set as the measurement range. For the ultrasonic sensor 172R on the rear right side, a predetermined range on the rear right side of the vehicle body 100 is set as the measurement range. Each ultrasonic sensor transmits the measurement information including the distance to the object to be measured and the direction of the object to be measured to the vehicle control device 11.

Further, the obstacle detection device 17 includes right and left contact sensors 173F (see FIG. 3) provided on the front side of the vehicle body 100 and right and left contact sensors 173R (see FIGs. 4A and 4B) provided on the rear side of the vehicle body 100. The contact sensor 173F on the front side of the vehicle body 100 detects an obstacle when the obstacle contacts the contact sensor 173F. In front of the contact sensor 173R on the rear side of the vehicle body 100 (rear side of the work vehicle 10), the spraying device 14 is provided. When an obstacle comes into contact with the spraying device 14, the contact sensor 173R detects the obstacle by the spraying device 14 moving to the rear (front side of the work vehicle 10). Each contact sensor transmits a detection signal to the vehicle control device 11 when detecting an obstacle.

The above configuration allows the work vehicle 10 to travel autonomously with high precision along the target route R, and also allows the spraying of a chemical solution or the like by the spraying device 14 to be performed properly.

The configuration of the work vehicle 10 described above is a configuration example of the work vehicle of the present invention, and the present invention is not limited to the configuration described above. The work vehicle 10 described above is a vehicle that can perform a spraying work in which a sprayed object is sprayed on a first crop row Vr and a second crop row Vr in each of the right-left directions of the first crop row Vr while traveling over the first crop row Vr. As another embodiment, the work vehicle 10 may have a normal shape in which the entire vehicle body 100 travels between the crop rows Vr (work passages) instead of the gantry shape of the vehicle body 100. In this case, the work vehicle 10 autonomously travels in each work passage without straddling the crop row Vr. Further, the spraying device 14 includes one sprayer, and switches among a spray pattern that sprays a chemical solution in right and left directions, a spray pattern that sprays the chemical solution only to the left, and a spray pattern that sprays the chemical solution only to the right, to perform the spraying work.

[Operation Terminal 20]

As illustrated in FIG. 2, the operation terminal 20 is an information processing apparatus that includes a controller 21, a storage 22, an operation acceptor/displayer 23, a communicator 24, and the like. The operation terminal 20 may include a portable terminal such as a tablet device, and a smartphone. The operation terminal 20 is an example of the route generation device of the present invention.

The communicator 24 is a communication interface for connecting the operation terminal 20 to the communication network N1 by wire or wirelessly and for executing data communication according to a predetermined communication protocol with one or more external devices such as the work vehicle 10 via the communication network N1.

The operation acceptor/displayer 23 is a user interface that includes a display such as an LCD or an organic EL display that displays various types of information and an operation acceptor such as a touch panel, mouse, and keyboard that accepts operations. The operator can operate the aforementioned operation acceptor to register various types of information (work vehicle information, field information, work information, etc., as described below) on the operation screen displayed on the aforementioned display. Further, the operator can also operate the aforementioned operation acceptor to give work start and travel stop instructions to the work vehicle 10. Furthermore, the operator, at a distance from the work vehicle 10, can grasp the traveling state, working condition, and surrounding situation of the work vehicle 10 that autonomously travels in the field F along the target route R, on the basis of the traveling locus displayed on the operation terminal 20 and the surrounding image of the vehicle body 100.

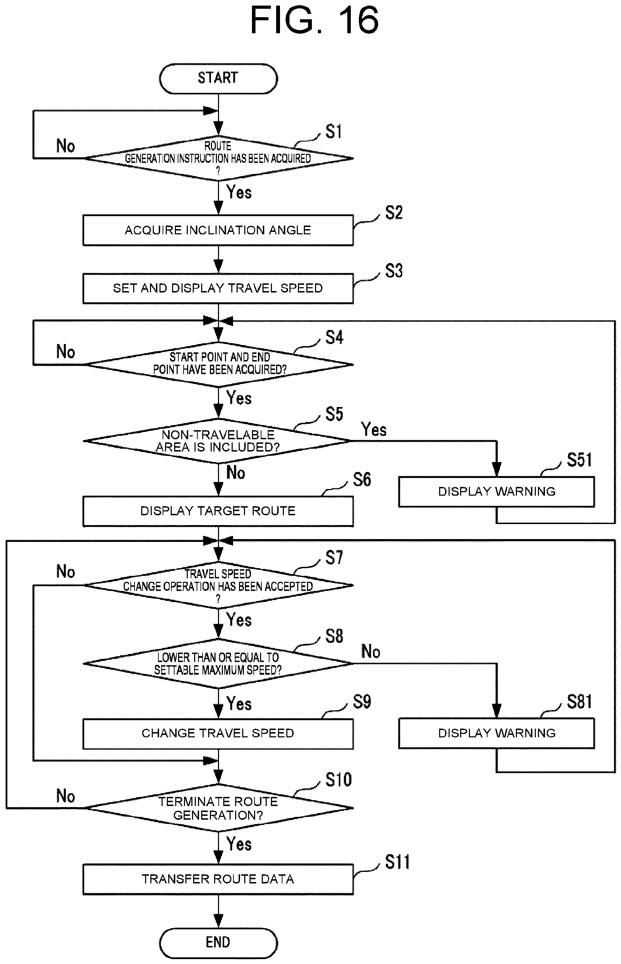

The storage 22 is a non-volatile storage such as an HDD or an SSD that stores various types of information. The storage 22 stores control programs such as a route generation program to cause the controller 21 to perform route generation processing (see FIG. 16) described below. For example, the aforementioned route generation program is non-transiently recorded on a computer-readable recording medium such as a CD and a DVD, and is read by a predetermined reading device (not illustrated) and stored in the storage 22. The aforementioned route generation program may be downloaded from a server (not illustrated) to the operation terminal 20 via the communication network N1 and stored in the storage 22.

The controller 21 includes control devices such as a CPU, a ROM, and a RAM. The aforementioned CPU is a processor that performs various arithmetic operations. The aforementioned ROM is a non-volatile storage in which control programs such as a BIOS and an OS for causing the CPU to execute various types of arithmetic processing are stored in advance. The aforementioned RAM is a volatile or non-volatile storage that stores various information, and is used as a temporary storage memory (work area) for various types of processing executed by the CPU. In addition, the controller 21 controls the operation terminal 20 by executing various control programs stored in advance in the ROM or the storage 22 by the CPU.

As illustrated in FIG. 2, the controller 21 includes various processors such as a setting processor 211, an acquisition processor 212, a speed setting processor 213, a route generation processor 214, and an output processor 215. The controller 21 functions as the aforementioned various processors by executing various processing according to the aforementioned control program by the aforementioned CPU. Further, some or all of the aforementioned processors may be configured by an electronic circuit. The aforementioned control program may be a program to cause a plurality of processors to function as the aforementioned processors.

The setting processor 211 sets and registers information on the work vehicle 10 (hereinafter referred to as work vehicle information), information on the field F (hereinafter referred to as field information), and information on a work (here, the spraying work) (hereinafter referred to as work information).

In the setting processing of the aforementioned work vehicle information, the setting processor 211 sets the information such as the model of the work vehicle 10, the position where the antenna 164 is attached in the work vehicle 10, the type of the work machine (here, the spraying device 14), the size and shape of the work machine, the position of the work machine with respect to the work vehicle 10, the vehicle speed and engine speed during work of the work vehicle 10, and the vehicle speed and engine speed during turning of the work vehicle 10, by the operator performing an operation to register the information on the operation terminal 20. In the present embodiment, information on the spraying device 14 is set as information on a work machine.

In the setting processing of the aforementioned field information, the setting processor 211 sets the information such as the position and shape of the field F, the work start position S to start a work and the work end position G to finish the work (see FIG. 6), and the work direction, by the operator performing an operation to register the information on the operation terminal 20. The work direction means the direction where the work vehicle 10 travels while performing a spraying work with the spraying device 14 in the work area which is the area of the field F excluding the nonwork area such as the headland.

Information on the position and shape of the field F can be acquired automatically, for example, by the operator manually driving the work vehicle 10 along the perimeter of the field F by one round and recording the transition of the position information of the antenna 164 at that time. Further, the position and shape of the field F can also be acquired on the basis of a polygon obtained by specifying multiple points on a map by the operator operating the operation terminal 20 while the map is displayed on the operation terminal 20. The area identified by the acquired position and shape of the field F is the area where the work vehicle 10 can travel (travel area).

In the setting processing of the aforementioned work information, the setting processor 211 is configured to be able to set the number of skips which is the number of work routes to be skipped when the work vehicle 10 turns in the headland, the width of the headland, and the like, as the work information.

The acquisition processor 212 acquires the inclination angle of the travel area of the work vehicle 10. Specifically, the acquisition processor 212 calculates the inclination angle of the travel area on the basis of the latitude, longitude, and altitude of multiple coordinate points in the travel area. The following is an example of how the inclination angle is calculated.

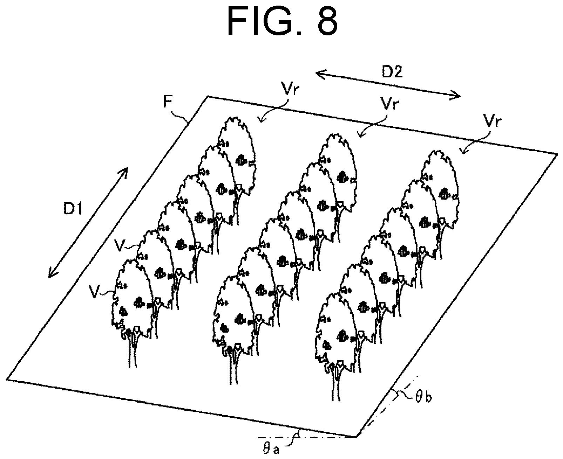

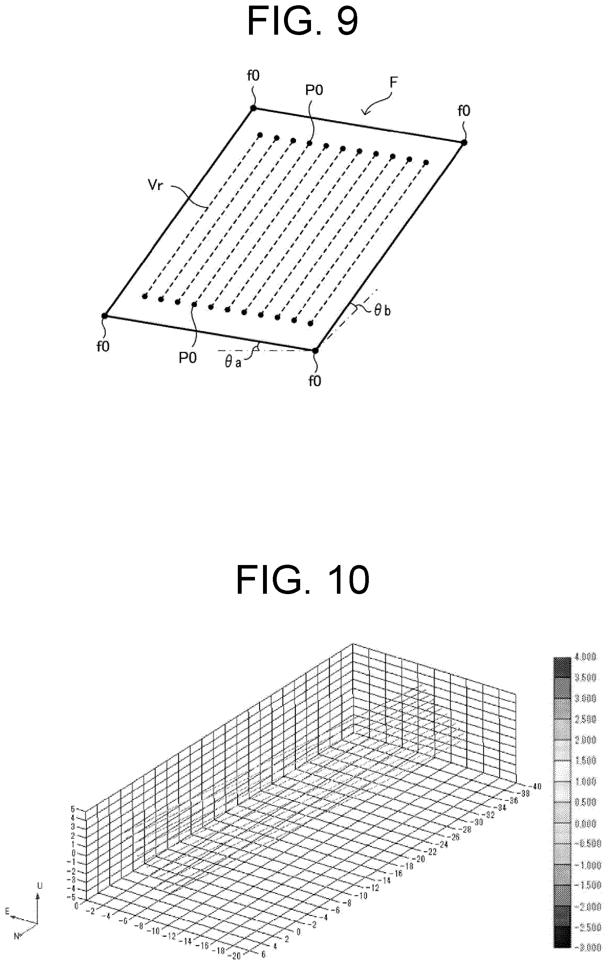

FIG. 8 illustrates an example of the inclined field F. The field F illustrated in FIG. 8 is inclined by an angle θa in the right-left direction (D2 direction) with respect to the traveling direction (D1 direction) of the work vehicle 10 in the field F, and is inclined by an angle θb in the traveling direction (D1 direction; front-back direction) of the work vehicle 10 in the field F. FIG. 9 illustrates, in the field F illustrated in FIG. 8, vertices f0 of the outer perimeter of the field F, and the multiple crop rows Vr of the field F and end points P0 of each crop row Vr. The work vehicle 10 according to the present embodiment shall travel on the inclined field F.

The acquisition processor 212 acquires the GNSS coordinates (latitude, longitude, and altitude) of both end points P0 of the crop row Vr. There are n rows of crop rows Vr arranged substantially in parallel, and the GNSS coordinates of the end point P0 of each crop row Vr are known. Therefore, the acquisition processor 212 converts the GNSS coordinates of each end point P0 into an ENU (East-North-Up) coordinate system (or an NED (North-East-Down) coordinate system with respect to a certain point. FIG. 10 schematically illustrates the ENU coordinates indicating the inclination state of each crop row Vr (each work route).

The acquisition processor 212 calculates an inclination angle θp (pitch angle) in the front-back direction of the work vehicle 10 when traveling on the crop row Vr in the ENU coordinate system, and an inclination angle θr (roll angle) in the right-left direction of the work vehicle 10.

There are n crop rows Vr, the line segment corresponding to the crop row Vr in the i-th row (i = 0 to n) is Li, and the end points P0 of the line segment Li are $Li\_end1$ ($E_{Li\_end1}$, $N_{Li\_end1}$, $U_{Li\_end1}$), and $Li\_end2$ ($E_{Li\_end2}$, $N_{Li\_end2}$, $U_{Li\_end2}$). The line segment Li is expressed by the following equation (1).

[Expression 1]

$$\begin{pmatrix} E \\ N \\ U \end{pmatrix} = \begin{pmatrix} E_{Li\_end1} \\ N_{Li\_end1} \\ U_{Li\_end1} \end{pmatrix} + t \begin{pmatrix} E_{Li\_end2} - E_{Li\_end1} \\ N_{Li\_end2} - N_{Li\_end1} \\ U_{Li\_end2} - U_{Li\_end1} \end{pmatrix} \quad \cdots \quad (1)$$

$$(0 \leqq t \leqq 1)$$

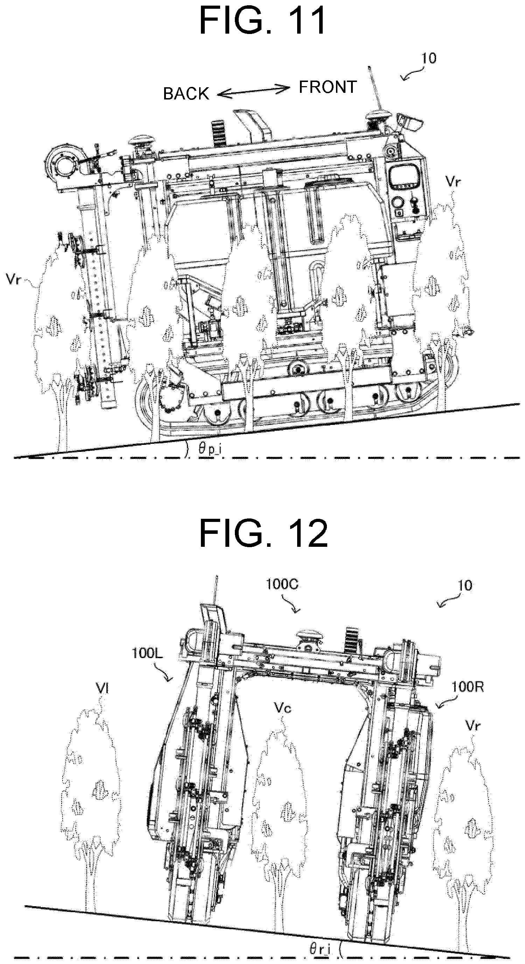

The acquisition processor 212 calculates the inclination angle θp_i (see FIG. 11) in the front-back direction when the work vehicle 10 travels on the line segment Li, by the following equation (2).

[Expression 2]

$$\theta p\_i = tan^{-1} \sqrt{\frac{\left(U_{Li\_end2} - U_{Li\_end1}\right)^2}{\left(E_{Li\_end2} - E_{Li\_end1}\right)^2 + \left(N_{Li\_end2} - N_{Li\_end1}\right)^2}} \quad \cdots \quad (2)$$

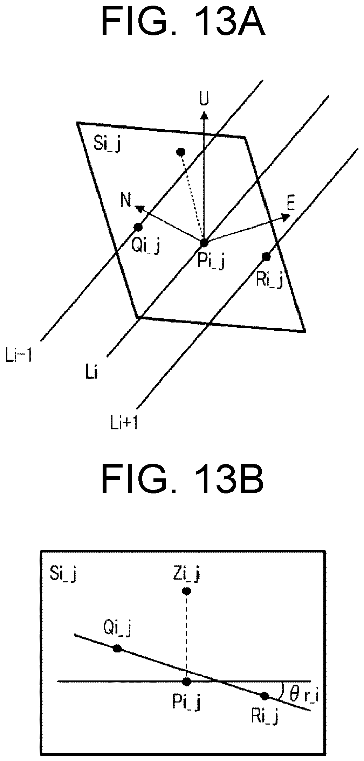

The acquisition processor 212 also calculates the inclination angle θr_i (see FIG. 12) in the right-left direction as follows. The acquisition processor 212 calculates the inclination angle θr_i for the point where each line segment Li is divided into k pieces. As illustrated in FIGs. 13A and 13B, the point where the line segment Li is divided is Pi_j (j = 0 to k, Pi_0 = Li_end1, Pi_k = Li_end2). The plane perpendicular to the line segment Li at the division point Pi_j on the line segment Li is Si_j. The intersections of the line segment Li-1 and the line segment Li+1 adjacent to the line segment Li and the plane Si_j are Qi_j and Ri_j, respectively. The direction of the line obtained by projecting a line parallel to the U-axis in the vertical upward direction passing through the division point Pi_j is the upward direction on the plane Si_j, and is the z-axis (Zij) of the plane Si_j (broken line in FIG. 13B). The acquisition processor 212 calculates the angle formed by the straight line connecting the Qi_j and Ri_j on the plane Si_j and the horizontal axis, as the inclination angle θr_i in the right-left direction at the division point Pi_j.

As described above, the acquisition processor 212 calculates the inclination angle θp_i in the front-back direction (see FIG. 11) and the inclination angle θr_i in the right-left direction (see FIG. 12). The method for calculating the inclination angle is not limited to the above method and may be any well-known method. The acquisition processor 212 is an example of the acquisition processor of the present invention.

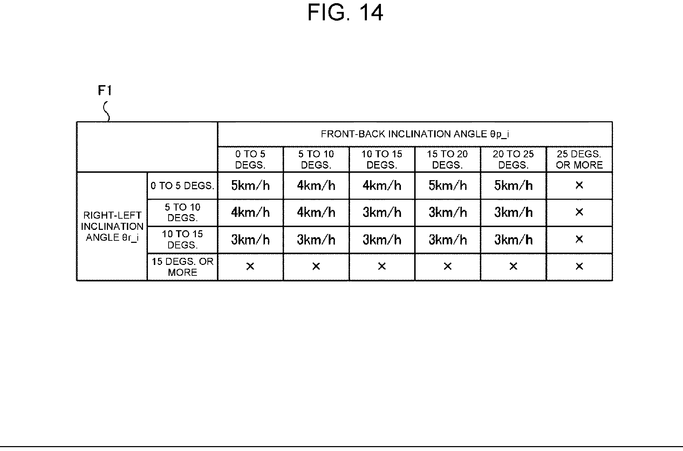

The speed setting processor 213 sets the travel speed of the work vehicle 10 for the travel area on the basis of the inclination angle of the travel area. Specifically, travel speed information F1 in which the inclination angle and the settable maximum speed which is the maximum travel speed that can be set for the travel area are associated in advance is stored in the storage 22. FIG. 14 is a diagram illustrating an example of the travel speed information F1. In the travel speed information F1, the settable maximum speed corresponding to the inclination angle θp_i in the front-back direction and the inclination angle θr_i in the right-left direction is registered in advance. For example, if the front-back inclination angle of the i-th crop row Vr (work route R1_i) θp_i is 4 degrees and the right-left inclination angle θr_i is 3 degrees, the settable maximum speed is 5 km/h. Further, if the front-back inclination angle of the i-th crop row Vr (work route R1_i) θp_i is 15 degrees and the right-left inclination angle θr_i is 10 degrees, the settable maximum speed is 3 km/h. The travel speed information F1 is set in advance in consideration of the traveling performance and safety of the work vehicle 10. In the travel speed information F1, "×" indicates that traveling is not possible (cannot be set) when the inclination angle θp_i in the front-back direction is 25 degrees or more, and traveling is not possible (cannot be set) when the inclination angle θr_i in the right-left direction is 15 degrees or more.

The speed setting processor 213 sets a travel speed equal to or lower than the settable maximum speed for the travel area. For example, if the front-back inclination angle θp_i of the i-th crop row Vr (work route R1_i) is 4 degrees, and the right-left inclination angle θr_i is 3 degrees, the speed setting processor 213 sets 5 km/h as the settable maximum speed of the work route R1_i. Further, for example, if the front-back inclination angle θp_i of the i-th crop row Vr (work route R1_i) is 15 degrees, and the right-left inclination angle θr_i is 10 degrees, the speed setting processor 213 sets 3 km/h as the settable maximum speed of the work route R1_i.

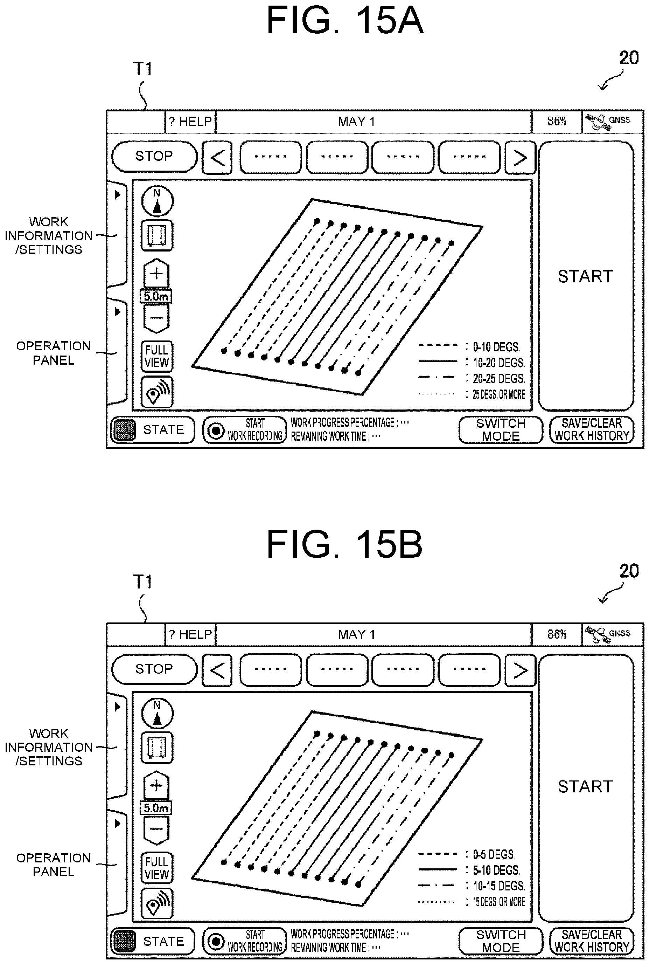

Here, the speed setting processor 213 causes the operation acceptor/displayer 23 to display the plurality of work routes R1 included in the target route R. Further, in the route generation screen T1, the speed setting processor 213 displays each of the plurality of work routes R1 in a different display manner for each inclination angle θp_i and θr_i. FIG. 15A illustrates the work route R1 displayed in a different display manner depending on the inclination angle θp_i in the front-back direction. FIG. 15B illustrates the work route R1 displayed in a different display manner depending on the inclination angle θr_i in the right-left direction. The speed setting processor 213 causes each work route R1 to be displayed in a different color, line type, or line thickness for each inclination angle.

According to the route generation screen T1 in FIGs. 15A and 15B, the operator (user) can easily grasp the inclination angle for each work route R1. Further, the operator can see that there are different inclination angles within one work route R1 (see FIG. 15B).

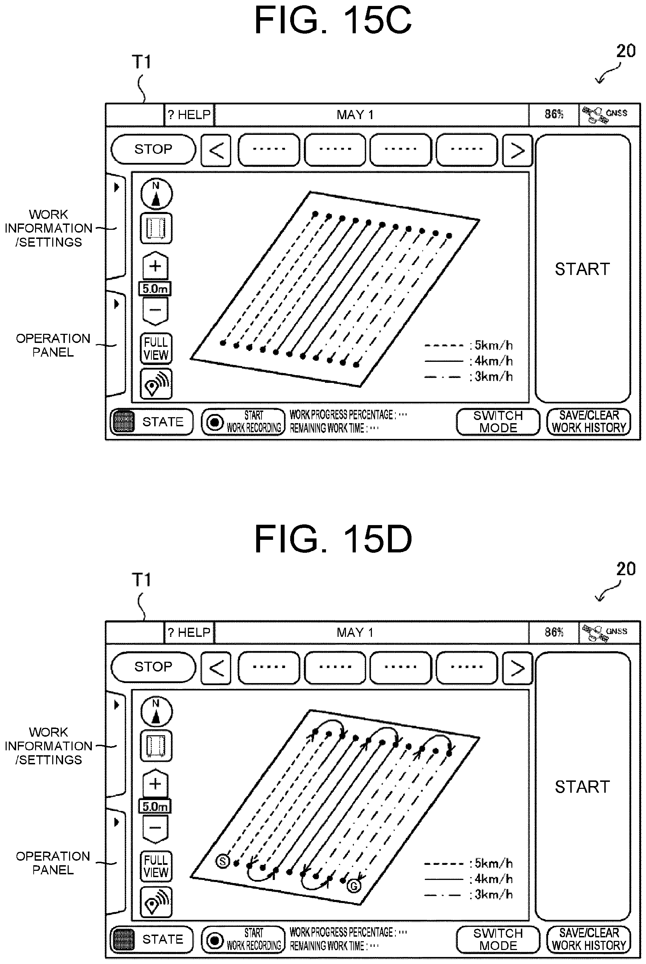

Further, in the route generation screen T1, the speed setting processor 213 displays each of the plurality of work routes R1 in a different display manner for each settable maximum speed. FIG. 15C illustrates the work route R1 displayed in a different display manner depending on the settable maximum speed. For example, as illustrated in FIG. 15C, the speed setting processor 213 displays the work route R1 of 5 km/h, the work route R1 of 4 km/h, and the work route R1 of 3 km/h in a different manner (for example, colors).

In this way, the speed setting processor 213 sets the aforementioned settable maximum speed as the travel speed for the work route R1. Further, the speed setting processor 213 sets the travel speed for each of the plurality of parallel linear work routes R1 for each work route R1. As another embodiment, the speed setting processor 213 may set the slowest settable maximum speed among the settable maximum speeds corresponding to each of all work routes R1, to all work routes R1 in common. Further, as another embodiment, the speed setting processor 213 may accept from the operator an operation to select a travel speed lower than or equal to the aforementioned settable maximum speed for each work route R1, and set the selected travel speed for each work route R1.

As described in detail below, the speed setting processor 213 can accept a change operation to change the set travel speed, and has a configuration for changing the aforementioned travel speed when the change operation is accepted.

The route generation processor 214 generates the target route R which is a route where the work vehicle 10 travels autonomously, on the basis of the each of the aforementioned setting information and the speed information of the aforementioned travel speed. The target route R is, for example, a route from the work start position S to the work end position G (see FIG. 6). The target route R illustrated in FIG. 6 includes a linear work route R1 for spraying a chemical solution on the crop V in the area where the crop V is planted, and a movement route R2 for moving between the crop rows Vr without the spraying work.

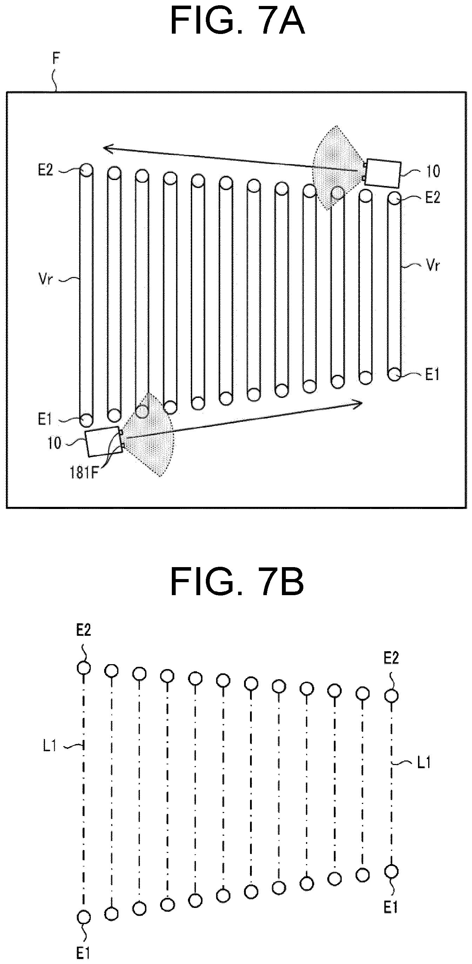

An example of the method for generating the target route R is explained using FIGs. 7A and 7B. FIG. 7A schematically illustrates the crop row Vr. First, the operator manually drives the work vehicle 10 along the perimeter of the crop row Vr (see FIG. 7A). The work vehicle 10 detects an end point E1 on one side (bottom side in FIG. 7A) and an end point E2 on the other side (top side in FIG. 7A) of each crop row Vr while traveling and acquires position information (coordinates) of the respective end point E1 and E2. The end points E1 and E2 may be the location of a crop V that has already been planted or the location of a target that indicates the location of a crop V that will be planted in the future. When acquiring the position information (coordinates) of the respective end point E1 and E2 from the work vehicle 10, the route generation processor 214 sets a line L1 (see FIG. 7B) connecting the corresponding end points E1 and E2 to the work route of the crop row Vr, and generates a target route R including a plurality of work routes and a movement route (turning route). The method for generating the target route R is not limited to the method described above. The route generation processor 214 may store the generated target route R in the storage 22.

Further, as illustrated in FIG. 15D, the route generation processor 214 causes the operation acceptor/displayer 23 to display the target route R including the work start position S (travel start position), work end position G (travel end position), work route R1, and movement route R2. Further, in the route generation screen T1 illustrated in FIG. 15D, the route generation processor 214 displays each of the plurality of work routes R1 in a different display manner for each travel speed. For example, the route generation processor 214 displays a first travel route having a first inclination angle in a first color corresponding to a first travel speed set on the basis of the first inclination angle, and displays a second travel route having a second inclination angle in a second color corresponding to a second travel speed set on the basis of the second inclination angle.

Here, if the inclination angle θp or θr of the travel area (work route R1) is greater than a threshold angle, the traveling accuracy and safety of the work vehicle 10 will be reduced. Accordingly, in a case where the inclination angle θp or θr of the travel area is larger than a threshold angle, the route generation processor 214 sets the travel area as a non-travelable area and excludes the travel area from the target route R.

Specifically, when accepting an operation from the operator to select the work start position S and the work end position G, if a non-travelable area is included between the work start position S and the work end position G, the route generation processor 214 makes a notification that the target route R cannot be generated. For example, the route generation processor 214 displays a warning (error notification) on the route generation screen T1 to prompt the operator to change the work start position S and the work end position G. Further, for example, the route generation processor 214 may set at least one of the work start position S and the work end position G to a position such that the non-travelable area is not included between the work start position S and the work end position G.

Further, the route generation processor 214 may be configured not to display the aforementioned non-travelable area in the route generation screen T1. This prevents the operator from mistakenly setting the work start position S or the work end position G in the aforementioned non-travelable area.

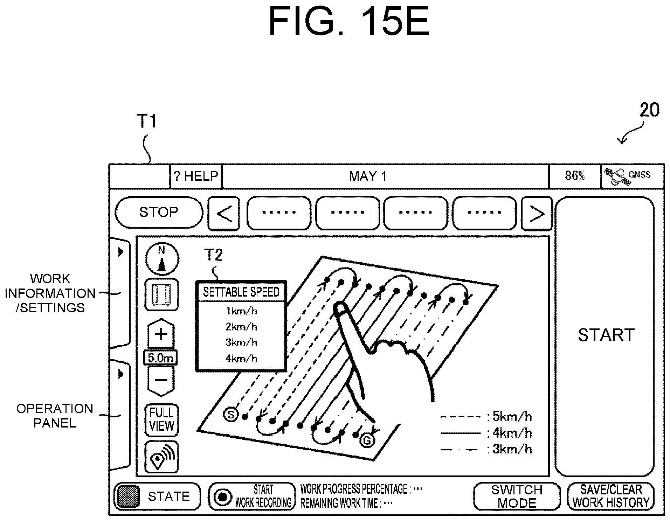

Here, the speed setting processor 213 changes the travel speed when an operation to change the set travel speed is accepted. For example, as illustrated in FIG. 15E, in the route generation screen when the operator selects (touches) the work route R1, the speed setting processor 213 displays (pops up) a selection screen T2 for selecting a settable travel speed. For example, if the operator selects the work route R1 of the settable maximum speed "4 km/h", the speed setting processor 213 displays the selection screen T2 on which any of 1 km/h to 4 km/h can be set (see FIG. 15E). For example, if the operator selects 3 km/h for the work route R1, the speed setting processor 213 sets the travel speed (4 km/h) set for the work route R1 to 3 km/h.

The aforementioned operation to change the travel speed is not limited to the operation illustrated in FIG. 15E. For example, the operator may select all work routes R1 at once and change the travel speed to the same travel speed. Further, the aforementioned operation to change the travel speed may be accepted after the speed setting processor 213 sets the settable maximum speed for each work route R1 (see FIG. 15C), or may be accepted after the route generation processor 214 generates the target route R (see FIG. 15D).

The speed setting processor 213 sets the aforementioned settable maximum speed or the changed travel speed for the travel area (work route R1). Then, the route generation processor 214 generates the target route R that includes speed information of the travel speed set for the aforementioned travel area.

The output processor 215 transfers route data including information on the target route R generated by the route generation processor 214 to the work vehicle 10. The aforementioned route data includes information on the set travel speed for each work route R1.

The output processor 215 may output the route data to a server (not illustrated). The aforementioned server stores and manages a plurality of pieces of the route data to be acquired from each of the plurality of operation terminals 20, in association with the operation terminals 20 and the work vehicle 10.

In addition to the processing described above, the controller 21 executes the processing of displaying various types of information on the operation acceptor/displayer 23. For example, the controller 21 displays, on the operation acceptor/displayer 23, a registration screen for registering work vehicle information, field information, work information, and the like, an operation screen for causing the work vehicle 10 to start autonomous traveling, a display screen for displaying the traveling state of the work vehicle 10, or the like.

Further, the controller 21 accepts various operations from the operator. Specifically, the controller 21 accepts, from the operator, a work start instruction to start work on the work vehicle 10, a travel stop instruction to stop the travel of the work vehicle 10 during autonomous travel, or the like. Upon receipt of each of the aforementioned instructions, the controller 21 outputs each of the aforementioned instructions to the work vehicle 10.

Upon receipt of the work start instruction from the operation terminal 20, the vehicle control device 11 of the work vehicle 10 starts the autonomous traveling and the spraying work of the work vehicle 10 along the target route R. Further, upon receipt of the travel stop instruction from the operation terminal 20, the vehicle control device 11 stops the autonomous traveling and the spraying work of the work vehicle 10.

The operation terminal 20 may be able to access the website of the agricultural support service provided by the server (agricultural support site) via the communication network N1. In this case, the operation terminal 20 can function as a terminal for operating the server by executing a browser program by the controller 21. The aforementioned server generates the target route R by setting the travel speed of the work vehicle 10 via a user operation on the operation terminal 20.

[Route Generation Processing]

With reference to FIG. 16, an example of the aforementioned route generation processing executed by the controller 21 of the operation terminal 20 is described below.

The present invention can be viewed as an invention of a route generation method that executes one or more steps included in the aforementioned route generation processing. Further, one or more steps included in the aforementioned route generation processing described here may be appropriately omitted. Each step in the aforementioned route generation processing may be executed in a different order as long as the same effect is obtained. Furthermore, although a case where the controller 21 executes each step in the aforementioned route generation processing is described here as an example, a route generation method in which one or more processors execute each step in the route generation processing in a distributed manner is also considered as another embodiment.

In step S1, the controller 21 determines whether a route generation instruction for generating the target route R of the work vehicle 10 has been acquired from the operator. If the controller 21 has acquired the route generation instruction (S1: Yes), the processing proceeds to step S2. The controller 21 waits until acquiring the route generation instruction (S1: No).

Next, in step S2, the controller 21 acquires the inclination angle of the traveled area. Specifically, the controller 21 calculates the inclination angle of the travel area on the basis of the latitude, longitude, and altitude of multiple coordinate points in the travel area. For example, the controller 21 calculates the inclination angle $\theta$p (pitch angle) of the work route R1 including the crop row Vr on the basis of the latitude, longitude, and altitude of both end points P0 of the crop row Vr. Further, for example, the controller 21 calculates the inclination angle $\theta$r (roll angle) of the work route R1 including the crop row Vr on the basis of the latitude, longitude, and altitude of the points of the right and left crop rows Vr adjacent to the crop row Vr. The controller 21 calculates the inclination angles $\theta$p and $\theta$r for each work route R1.

When calculating the inclination angles $\theta$p and $\theta$r for each work route R1, the controller 21 may cause the operation acceptor/displayer 23 to display a screen (FIGs. 15A and 15B) on which the inclination angles $\theta$p and $\theta$r of each work route R1 can be identified.

Next, in step S3, the controller 21 sets the travel speed of the work vehicle 10 for the work route R1 on the basis of the inclination angles $\theta$p and $\theta$r of the work route R1, and causes the operation acceptor/displayer 23 to display a screen (see FIG. 15C) on which the travel speed can be identified for each work route R1. Further, the controller 21 acquires the settable maximum speed corresponding to the inclination angles $\theta$p and $\theta$r of the work route R1 with reference to the travel speed information F1 illustrated in FIG. 14, and sets the acquired settable maximum speed to the travel speed for the work route R1.

Next, in step S4, the controller 21 determines whether the work start position S (start point) and work end position G (end point) of the work vehicle 10 have been acquired from the operator. For example, when the operator performs operations to specify the work start position S and the work end position G on the route generation screen T1 illustrated in FIG. 15D, the controller 21 acquires the work start position S and the work end position G. When the controller 21 acquires the work start position S and the work end position G (S4: Yes), the processing proceeds to step S5. The controller 21 waits until acquiring the work start position S and the work end position G (S4: No).

Next, in step S5, the controller 21 determines whether the non-travelable area, which is the work route R1 where the inclination angles $\theta$p and $\theta$r are larger than the threshold angle, is included in the route from the work start position S to the work end position G specified by the operator. If the non-travelable area is not included in the route from the work start position S to the work end position G (S5: No), the processing proceeds to step S6. On the other hand, if the non-travelable area is included in the route from the work start position S to the work end position G (S5: Yes), the processing proceeds to step S51.

In step S51, the controller 21 displays a warning on the route generation screen T1 (see FIG. 15D). This allows the operator to recognize that the work start position S and the work end position G are improperly positioned. The processing then returns to step S4, which again accepts an operation from the operator to select the work start position S and the work end position G. The controller 21 may present candidates for the work start position S and the work end position G that can be selected by the operator, or may automatically set the work start position S and the work end position G such that the aforementioned non-travelable area is not included.

In step S6, the controller 21 generates the target route R. Specifically, the controller 21 generates the target route R including route information including the work start position S, the work end position G, the work route R1, and the movement route R2, and speed information of the travel speed set for each work route R1. Further, the controller 21 displays the generated target route R on the route generation screen T1 (see FIG. 15D). Further, in the route generation screen T1 illustrated in FIG. 15D, the route generation processor 214 displays each of the plurality of work routes R1 in a different display manner for each travel speed.

Next, in step S7, the controller 21 determines whether an operation (change operation) to change the travel speed set for the work route R1 has been accepted from the operator. For example, when the operator selects (touches) a desired work route R1 on the route generation screen T1 illustrated in FIG. 15E, the controller 21 displays (pops up) the selection screen T2 for selecting a travel speed that can be set for the work route R1. The operator can select the travel speed on the selection screen T2. If the controller 21 accepts the aforementioned change operation (S7: Yes), the processing proceeds to step S8. If the controller 21 does not accept the aforementioned change operation (S7: No), the processing proceeds to step S10. For example, if the operator presses a save button (not illustrated) or the like on the route generation screen T1 illustrated in FIG. 15D, the processing proceeds to step S10.

In step S8, the controller 21 determines whether the travel speed selected by the operator is lower than or equal to the preset settable maximum speed. If the travel speed selected by the operator is lower than or equal to the aforementioned settable maximum speed (S8: Yes), the processing proceeds to step S9. On the other hand, if the travel speed selected by the operator is exceeds the aforementioned settable maximum speed (S8: No), the processing proceeds to step S81.

In step S81, the controller 21 displays a warning on the route generation screen T1 (see FIG. 15E). This allows the operator to recognize that the selected travel speed is inappropriate. The processing then returns to step S7, which again accepts an operation from the operator to change the travel speed. The controller 21 may present the operator with candidates for travel speeds lower than or equal to the aforementioned settable maximum speed, or may automatically change the travel speed to a travel speed lower than or equal to the aforementioned settable maximum speed. If a configuration is employed in which the operator cannot select a travel speed that exceeds the aforementioned settable maximum speed, steps S8 and S81 may be omitted.

In step S9, the controller 21 changes the settable maximum speed set for the work route R1 to the travel speed selected by the operator.

Next, in step S10, the controller 21 determines whether to terminate the route generation processing. For example, in the route generation screen T1 (see FIGs. 15D and 15E), when the operator presses the save button after the travel speed is set for each work route R1, the controller 21 terminates the route generation processing. In this way, the controller 21 determines the target route R.

Next, in step S11, the controller 21 transfers the route data of the target route R to the work vehicle 10. When acquiring the aforementioned route data, the work vehicle 10 stores same in the storage 12.

Upon receipt of the work start instruction from the operation terminal 20, the vehicle control device 11 of the work vehicle 10 starts the autonomous traveling. For example, when the operator presses the start button on the operation terminal 20, the operation terminal 20 outputs a work start instruction to the work vehicle 10. When the vehicle control device 11 acquires the work start instruction from the operation terminal 20, the work vehicle 10 starts the autonomous traveling along the target route R. Further, the vehicle control device 11 controls the travel speed of the work vehicle 10 for each work route R1 on the basis of the speed information included in the target route R. The work vehicle 10 can adjust the travel speed in accordance with the aforementioned speed information without having to go through the processing of detecting the inclination angle of the work route R1 during the autonomous traveling.

As described above, the autonomous travel system 1 generates the target route R for the work vehicle 10 that autonomously travels in the travel area. Specifically, the autonomous travel system 1 acquires the inclination angle of the travel area and sets the travel speed of the work vehicle 10 for the travel area on the basis of the inclination angle. Further, the autonomous travel system 1 generates the target route R that includes speed information of the aforementioned travel speed set for the aforementioned travel area. Further, the route generation method according to the present embodiment is a method in which one or more processors generate the target route R for the work vehicle 10 autonomously traveling in a travel area, and execute acquiring an inclination angle of the travel area, setting a travel speed of the work vehicle 10 for the travel area on a basis of the inclination angle, and generating the target route R including speed information of the travel speed set for the travel area. Further, the operation terminal 20 according to the present embodiment is a route generation device for generating a target route for a traveling vehicle autonomously traveling in a travel area, and includes the acquisition processor 212 that acquires an inclination angle of the travel area, the speed setting processor 213 that sets a travel speed of the work vehicle 10 for the travel area on a basis of the inclination angle of the travel area, and the route generation processor 214 that generates the target route R including speed information of the travel speed set for the travel area.

According to the above configuration, the travel speed according to the inclination angle of the travel area (work route R1) can be set in the route generation phase before the work vehicle 10 starts autonomous traveling. This allows the operator to know in advance the travel speed of the work vehicle 10 when it is actually traveling on a slope land. Further, the operator can accurately grasp the work schedule, such as the required work time. In other words, the operator can know the travel speed of the work vehicle 10 traveling autonomously on a slope land before starting autonomous traveling. Further, the man-hours required for route generation by the operator can be reduced because the travel speed according to the inclination angle for each work area can be set automatically. Thus, the operator's work efficiency in route generation can be improved.

The present invention is not limited to the above-described embodiment. Other embodiments of the present invention will be described below.

In the embodiment described above, the controller 21 of the operation terminal 20 sets the travel speed according to the inclination angle, for the work route R1 for traveling straight in the target route R. However, as another embodiment, the controller 21 may set the travel speed according to the inclination angle $\theta$s of the movement route R2, for the movement route R2 (headland area).

The acquisition processor 212 acquires the inclination angle $\theta$s of the movement route R2 of the work vehicle 10. Specifically, the acquisition processor 212 calculates the inclination angle $\theta$s of the movement route R2 on the basis of the latitude, longitude, and altitude of multiple coordinate points in the headland area. The following is an example of how the inclination angle $\theta$s of the movement route R2 is calculated.

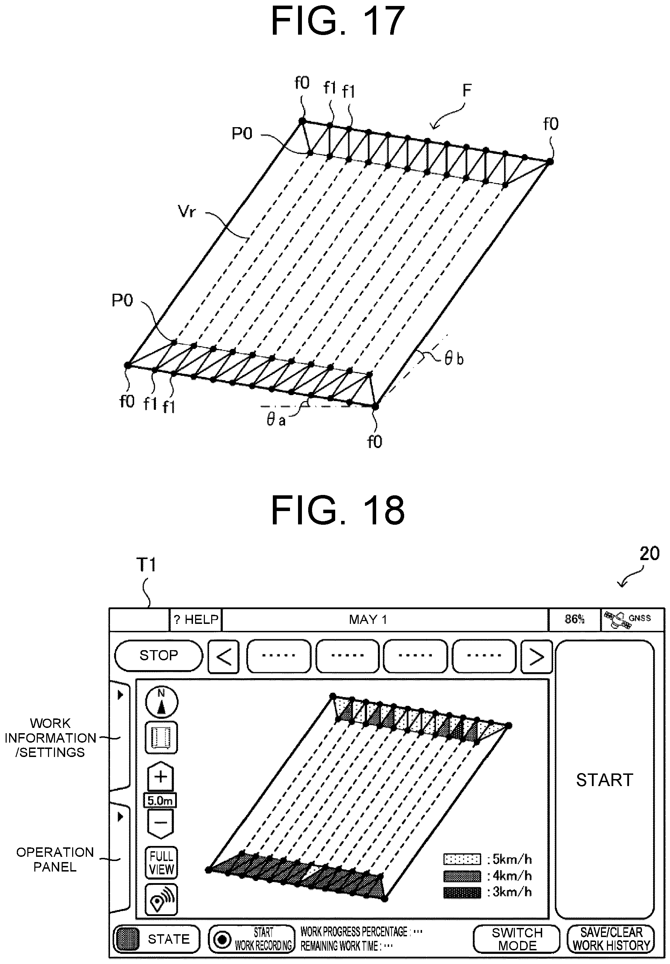

As illustrated in FIG. 17, in the field F illustrated in FIG. 9, a linearly interpolated interpolation point f1 is provided between the vertices f0 of the outer perimeter of the field f1. A polygon (triangle) consisting of the vertex f0, the interpolation point f1, and the end point P0 of the crop row Vr is created. The vertices of the triangle in the ENU coordinate system are defined as $P_i$ ($E_i$, $N_i$, Ui), $P_j$ ($E_j$, $N_j$, $U_j$), and $P_k$ ($E_k$, $N_k$, $U_k$). The vector perpendicular to the plane $P_iP_jP_k$ is represented by the vector $P_iP_j$ * the vector $P_iP_k$

When the vertices $P_i$, $P_j$, and $P_k$ are taken clockwise when viewed from above, the angle formed by the vertically upward vector $e_3$ (0, 0, 1) and the vector $P_iP_j$ * vector $P_iP_k$ is the inclination angle of the plane $P_iP_jP_k$. The inclination angle $\theta$s of the triangle bounded by the three points is expressed by the following equation (3).

[Expression 3]

$$\theta s = cos^{-1}\left(\frac{(\overrightarrow{P_iP_j} \times \overrightarrow{P_iP_k}) \cdot \overrightarrow{e_3}}{|\overrightarrow{P_iP_j} \times \overrightarrow{P_iP_k}|}\right) \quad \cdots \; (3)$$

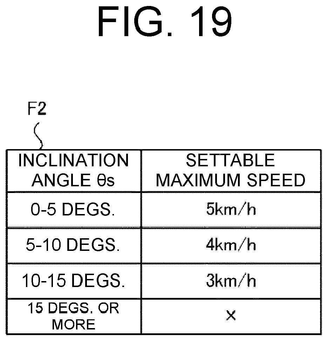

FIG. 18 illustrates a headland area displayed in a different display manner in accordance with the inclination angle $\theta$s calculated for each triangle. Further, the controller 21 acquires the settable maximum speed corresponding to the inclination angle $\theta$s of the movement route R2 with reference to the travel speed information F2 illustrated in FIG. 19, and sets the acquired settable maximum speed to the travel speed for the movement route R2. FIG. 19 is a diagram illustrating one example of the travel speed information F2. The settable maximum speed corresponding to the inclination angle $\theta$s of the headland area is registered in advance in the travel speed information F2. In the route generation screen T1 illustrated in FIG. 18, the controller 21 displays the headland area (movement route R2) in a display manner indicating the travel speed according to the inclination angle $\theta$s.

In this way, the controller 21 sets the travel speed according to the inclination angle $\theta$s for each turning route in the headland area including the turning route. Further, the controller 21 may accept, from the operator, a change operation to change the set travel speed (the settable maximum speed), similarly to the work route R1 described above.

Further, when the target route R includes a headland area (non-travelable area) where the work vehicle 10 cannot travel, the controller 21 may display a warning on the route generation screen T1.

As described above, the controller 21 can set the travel speed of the work vehicle 10 for the work route R1 on the basis of the inclination angles $\theta$p and $\theta$r of the work route R1, and can also set the travel speed of the work vehicle 10 for the movement route R2 on the basis of the inclination angle $\theta$s of the movement route R2 (turning route). This allows the operator to know in advance the travel speed of the entire area where the work vehicle 10 will travel. The work routes R1 and the movement route R2 are respectively an example of the travel area of the present invention.

In each of the above embodiments, the operation terminal 20 alone corresponds to the route generation device according to the present invention, but the route generation device according to the present invention may include one or more components of the operation terminal 20 and the server (not illustrated). For example, the aforementioned server alone may constitute the route generation device according to the present invention.

REFERENCE SIGNS LIST

| | |
|---|---|
| 1: | autonomous travel system |
| 10: | work vehicle (traveling vehicle) |
| 11: | vehicle control device |
| 14: | spraying device |
| 20: | operation terminal (route generation device) |
| 211: | setting processor |
| 212: | acquisition processor |
| 213: | speed setting processor |
| 214: | route generation processor |
| 215: | output processor |
| 22: | storage |
| 40: | base station |
| 50: | satellite |
| F: | field (slope land) |
| P0: | end point |
| R: | target route |
| R1: | work route (travel area, travel route) |
| R2: | movement route (travel area, travel route) |
| V: | crop |
| Vr: | crop row |
| S: | work start position (travel start position) |
| G: | work end position (travel end position) |
| $\theta p$: | (front-back) inclination angle (pitch angle) |
| $\theta r$: | (right-left) inclination angle (roll angle) |
| $\theta s$: | (triangle) inclination angle |

**Claims**

1. A route generation method for generating a target route for a traveling vehicle autonomously traveling in a travel area, the route generation method executing:

   acquiring an inclination angle of the travel area;
   setting a travel speed of the traveling vehicle for the travel area on a basis of the inclination angle of the travel area; and
   generating the target route including speed information of the travel speed set for the travel area.

2. The route generation method according to claim 1,

   wherein the inclination angle and a settable maximum speed that is a maximum travel speed that can be set for the travel area are associated in advance and stored in a storage; and
   wherein a travel speed equal to or lower than the settable maximum speed is set for the travel area.

3. The route generation method according to claim 2, wherein when an operation to select a travel speed equal to or lower than the settable maximum speed corresponding to the inclination angle is accepted, a selected travel speed is set for the travel area.

4. The route generation method according to any one of claims 1 to 3,

wherein the target route includes a plurality of travel routes, and
wherein in an operation terminal displaying the target route, each of the plurality of travel routes is displayed in a different display manner for each travel speed.

5. The route generation method according to claim 4,

wherein a first travel route having a first inclination angle is displayed in a first color corresponding to a first travel speed set on a basis of the first inclination angle, and
wherein a second travel route having a second inclination angle different from the first inclination angle is displayed in a second color corresponding to a second travel speed set on a basis of the second inclination angle.

6. The route generation method according to any one of claims 1 to 5, wherein in a case where the inclination angle of the travel area is larger than a threshold angle, the travel area is set as a non-travelable area and excluded from the target route.

7. The route generation method according to claim 6, wherein when an operation to select a travel start position at which the traveling vehicle starts traveling and a travel end position at which the traveling vehicle ends traveling is accepted, if the non-travelable area is included between the travel start position and the travel end position, a notification that the target route cannot be generated is made.

8. The route generation method according to claim 6 or 7, wherein when an operation to select a travel start position at which the traveling vehicle starts traveling and a travel end position at which the traveling vehicle ends traveling is accepted, if the non-travelable area is included between the travel start position and the travel end position, at least one of the travel start position and the travel end position is set to a position such that the non-travelable area is not included between the travel start position and the travel end position.

9. The route generation method according to any one of claims 6 to 8, wherein the non-travelable area is not displayed on an operation terminal displaying the target route.

10. The route generation method according to any one of claims 1 to 9, wherein the inclination angle of the travel area is calculated on a basis of a latitude, a longitude, and an altitude of multiple coordinate points in the travel area.

11. The route generation method according to any one of claims 1 to 10,

wherein the target route includes a plurality of parallel linear travel routes, and
wherein the travel speed is set for each of the travel routes.

12. The route generation method according to any one of claims 1 to 11,

wherein the target route includes a plurality of turning routes, and
wherein the travel speed is set for each of the turning routes.

13. The route generation method according to any one of claims 1 to 12, wherein route data of the target route is transferred to the traveling vehicle.

14. A route generation device for generating a target route for a traveling vehicle autonomously traveling in a travel area, the route generation device comprising:

an acquisition processor that acquires an inclination angle of the travel area;
a speed setting processor that sets a travel speed of the traveling vehicle for the travel area on a basis of the inclination angle of the travel area; and
a route generation processor that generates the target route including speed information of the travel speed set for the travel area.

15. A route generation program for generating a target route for a traveling vehicle autonomously traveling in a travel area, the route generation program for causing one or more processors to execute:

acquiring an inclination angle of the travel area;

setting a travel speed of the traveling vehicle for the travel area on a basis of the inclination angle of the travel area; and

generating the target route including speed information of the travel speed set for the travel area.

# FIG. 1

# FIG. 2

20 — OPERATION TERMINAL

21 — CONTROLLER

211 — SETTING PROCESSOR

212 — ACQUISITION PROCESSOR

213 — SPEED SETTING PROCESSOR

214 — ROUTE GENERATION PROCESSOR

215 — OUTPUT PROCESSOR

22 — STORAGE

23 — OPERATION ACCEPTOR/DISPLAYER

24 — COMMUNICATOR

N1 —

10 — WORK VEHICLE

11 — VEHICLE CONTROL DEVICE

12 — STORAGE

13 — TRAVELING DEVICE

14 — SPRAYING DEVICE

15 — COMMUNICATOR

17 — OBSTACLE DETECTION DEVICE

16 — POSITIONING DEVICE

161 — POSITIONING CONTROLLER

162 — STORAGE

163 — COMMUNICATOR

164 — ANTENNA

# FIG. 3

# FIG. 4A

FRONT ⟵⟶ BACK

# FIG. 4B

BACK ⟵⟶ FRONT

# FIG. 4C

# FIG. 5

# FIG. 6

# FIG. 7A

# FIG. 7B

# FIG. 8

# FIG. 9

# FIG. 10

# FIG. 11

BACK ⟵⟶ FRONT

10

Vr

Vr

$\theta_{p\_i}$

# FIG. 12

100C

10

100L

100R

Vl

Vc

Vr

$\theta_{r\_i}$

# FIG. 13A

# FIG. 13B

FIG. 14

F1

| | | FRONT-BACK INCLINATION ANGLE θp_i | | | | | |
|---|---|---|---|---|---|---|---|
| | | 0 TO 5 DEGS. | 5 TO 10 DEGS. | 10 TO 15 DEGS. | 15 TO 20 DEGS. | 20 TO 25 DEGS. | 25 DEGS. OR MORE |
| RIGHT-LEFT INCLINATION ANGLE θr_i | 0 TO 5 DEGS. | 5km/h | 4km/h | 4km/h | 5km/h | 5km/h | × |
| | 5 TO 10 DEGS. | 4km/h | 4km/h | 3km/h | 3km/h | 3km/h | × |
| | 10 TO 15 DEGS. | 3km/h | 3km/h | 3km/h | 3km/h | 3km/h | × |
| | 15 DEGS. OR MORE | × | × | × | × | × | × |

# FIG. 15A

# FIG. 15B

# FIG. 15C

20

T1

| ? HELP | MAY 1 | 86% | GNSS |

STOP  < ····· ····· ····· ····· >

START

WORK
INFORMATION
/SETTINGS

N

5.0m

FULL
VIEW

OPERATION
PANEL

----- :5km/h
——— :4km/h
— · — :3km/h

STATE  ● START
WORK RECORDING  WORK PROGRESS PERCENTAGE : ···
REMAINING WORK TIME : ····  SWITCH
MODE  SAVE/CLEAR
WORK HISTORY

# FIG. 15D

20

T1

| ? HELP | MAY 1 | 86% | GNSS |

STOP  < ····· ····· ····· ····· >

START

WORK
INFORMATION
/SETTINGS

N

5.0m

FULL
VIEW

OPERATION
PANEL

S

G

----- :5km/h
——— :4km/h
— · — :3km/h

STATE  ● START
WORK RECORDING  WORK PROGRESS PERCENTAGE : ···
REMAINING WORK TIME : ····  SWITCH
MODE  SAVE/CLEAR
WORK HISTORY

# FIG. 15E

# FIG. 16

```
                    ┌─────────┐
                    │  START  │
                    └─────────┘
                         │
    ┌────────────────────┤
    │                    ▼
    │         ╱─────────────────────╲  S1
 No │        ╱         ROUTE          ╲
    └───────< GENERATION INSTRUCTION HAS BEEN ACQUIRED >
             ╲            ?            ╱
              ╲─────────────────────╱
                         │ Yes
                         ▼
              ┌─────────────────────────┐  S2
              │ ACQUIRE INCLINATION ANGLE│
              └─────────────────────────┘
                         │
                         ▼
              ┌─────────────────────────┐  S3
              │ SET AND DISPLAY TRAVEL SPEED│
              └─────────────────────────┘
                         │
    ┌────────────────────┤◄──────────────────────────────────────┐
    │                    ▼                                        │
 No │         ╱─────────────────────╲  S4                        │
    └───────< START POINT AND END     >                          │
             ╲ POINT HAVE BEEN ACQUIRED?╱                         │
              ╲─────────────────────╱                            │
                         │ Yes                                    │
                         ▼                                        │
               ╱─────────────────────╲  S5    Yes                │
              < NON-TRAVELABLE          >─────────┐               │
               ╲ AREA IS INCLUDED?      ╱         │               │
                ╲─────────────────────╱          ▼               │
                         │ No          ┌──────────────────┐  S51  │
                         │  S6         │ DISPLAY WARNING  │       │
                         ▼             └──────────────────┘───────┘
              ┌─────────────────────────┐
              │   DISPLAY TARGET ROUTE  │
              └─────────────────────────┘
                         │
    ┌────────────────────┤◄──────────────────────────────────────┐
    │                    ▼                                        │
 No │         ╱─────────────────────╲  S7                        │
    └───────< TRAVEL SPEED            >                          │
             ╲ CHANGE OPERATION HAS BEEN ACCEPTED ╱               │
              ╲          ?          ╱                             │
                         │ Yes                                    │
                         ▼                                        │
               ╱─────────────────────╲  S8    No                 │
              < LOWER THAN OR EQUAL TO  >─────────┐               │
               ╲ SETTABLE MAXIMUM SPEED?╱         │               │
                ╲─────────────────────╱           │               │
                         │ Yes  S9                ▼  S81          │
              ┌─────────────────────────┐  ┌──────────────────┐   │
              │  CHANGE TRAVEL SPEED    │  │ DISPLAY WARNING  │   │
              └─────────────────────────┘  └──────────────────┘───┘
    ┌────────────────────┤
    │                    ▼
 No │         ╱─────────────────────╲  S10
    └───────< TERMINATE ROUTE        >
             ╲ GENERATION?            ╱
              ╲─────────────────────╱
                         │ Yes
                         ▼
              ┌─────────────────────────┐  S11
              │    TRANSFER ROUTE DATA  │
              └─────────────────────────┘
                         │
                         ▼
                    ┌─────────┐
                    │   END   │
                    └─────────┘
```

34

# FIG. 17

# FIG. 18

35

# FIG. 19

F2

| INCLINATION ANGLE θs | SETTABLE MAXIMUM SPEED |
|---|---|
| 0-5 DEGS. | 5km/h |
| 5-10 DEGS. | 4km/h |
| 10-15 DEGS. | 3km/h |
| 15 DEGS. OR MORE | × |

Europäisches
Patentamt

European
Patent Office

Office européen
des brevets

# EUROPEAN SEARCH REPORT

Application Number

EP 22 17 4337

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 567 446 A1 (YANMAR CO LTD [JP]) 13 November 2019 (2019-11-13) * paragraph [0020] – paragraph [0133] * ----- | 1-15 | INV. G05D1/02 |
| X | JP 2019 213557 A (YANMAR CO LTD) 19 December 2019 (2019-12-19) * paragraph [0027] – paragraph [0080] * ----- | 1,14,15 | |
| X | WO 2020/189484 A1 (KOMATSU MFG CO LTD [JP]) 24 September 2020 (2020-09-24) * paragraph [0022] – paragraph [0077] * ----- | 1,14,15 | |

TECHNICAL FIELDS
SEARCHED      (IPC)

G05D

The present search report has been drawn up for all claims

| Place of search | Date of completion of the search | Examiner |
|---|---|---|
| Munich | 26 September 2022 | Coda, Ruggero |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 17 4337

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2022

| Patent document cited in search report | | Publication date | Patent family member(s) | | Publication date |
|---|---|---|---|---|---|
| EP 3567446 | A1 | 13-11-2019 | EP | 3567446 A1 | 13-11-2019 |
| | | | JP | 6663366 B2 | 11-03-2020 |
| | | | JP | 2018120491 A | 02-08-2018 |
| | | | US | 2020033143 A1 | 30-01-2020 |
| | | | US | 2022163332 A1 | 26-05-2022 |
| | | | WO | 2018139024 A1 | 02-08-2018 |
| JP 2019213557 | A | 19-12-2019 | NONE | | |
| WO 2020189484 | A1 | 24-09-2020 | AU | 2020240578 A1 | 29-07-2021 |
| | | | CA | 3127178 A1 | 24-09-2020 |
| | | | JP | 2020154893 A | 24-09-2020 |
| | | | US | 2022105953 A1 | 07-04-2022 |
| | | | WO | 2020189484 A1 | 24-09-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005215742 A